# EUROPEAN PATENT APPLICATION

(11) **EP 3 760 583 A1**
(43) Date of publication of application: **06.01.2021**
(21) Application number: 19305922.7
(22) Date of filing: 05.07.2019
(51) Int. Cl.: C01B 32/186, C01B 32/194

(54) **METHOD FOR OBTAINING STABLE N-TYPE DOPED GRAPHENE®**

(71) Applicant: Advanced Nano Industry, 92110 Clichy (FR)
(72) Inventor: SUHAIL, Ahmed, Plymouth, PL3 4HE (GB); PAN, Genhua, Plymouth, PL5 3UE (GB)
(74) Representative: Santarelli

(57) **Abstract**

The invention concerns a method for producing N-type graphene®, comprising the provision of a graphene® to be doped from an initial graphene® layer which can be a CVD-graphene® grown on a Cu foil, and the N-doping of the graphene® to be doped for obtaining the N-type graphene®. The method is characterized in that the provision of the graphene® to be doped includes an annealing step where a graphene®-based material issued from the initial graphene® layer is annealed, preferably at 350°C for 3h in a forming gas composed of Argon and Dihydrogen, whereby the graphene® to be doped is an annealed graphene® based material. The invention also concerns the N-type graphene® obtained by the above method, that is a N-type graphene® characterized by a Raman spectrum having a 2D peak at a wavelength between 2665 to 2675 cm⁻¹ and a G peak at a wavelength between 1565 to 1575 cm⁻¹. Thanks to the annealing, the N-doping is particularly efficient and stable.

## Description

### FIELD OF THE INVENTION

The invention deals with a method for obtaining N-type doped graphene®, preferably N-type doped CVD-graphene®, which can be used, for example, in the manufacturing of graphene®-based cathodes.

It is reminded that graphene® is an allotrope of carbon in the form of a two-dimensional, atomic-scale, hexagonal lattice, in which one atom forms each vertex. The attractive properties of graphene®, such as near-zero bandgap, high electrical conductivity, high mobility, flexibility, and high transparency have stimulated a lot of research interest. A transparent electrode is one of the promising applications for graphene®.

It is also reminded that doping a semi-conductor consists in modifying the equilibrium between electrons and holes in the semi-conductor either by implementing electron acceptor impurities (P-type doping) which creates states near the valence band and increase the rate of holes in the semi-conductor, or by implementing electron donor impurities (N-type doping) which creates states near the conduction band and increase the rate of electrons in the semi-conductor.

In all the description, the expression "N-type graphene®" is equivalent to "N-type doped graphene®" or "N-doped graphene®".

### BACKGROUND OF THE INVENTION

So far, a stable and efficient P-type graphene® has been efficiently achieved. In contrast, the task of achieving a stable and efficient N-type graphene® is difficult to accomplish. To achieve N-type graphene®, doping processes such as immersing graphene® samples, introducing nitrogen sources through a chemical vapor deposition and coating layers on graphene® were applied, where electron donation to graphene® by dopant materials during these processes results in N-doping in the graphene®.

However, Raman results showed there was very small shifts (meaning offsets toward a lower wavelength) of G and 2D peak in the spectrum of graphene® samples after doping. Additionally, the D peak in the Raman spectrum of doped graphene® increased (that is to say that the D peak is offset toward a higher wavelength), which indicates too a defect in the graphene® lattice. Besides, the stability of manufactured devices made of doped graphene® was no more than a few days when exposed to air.

Consequently a need exists to provide a method for producing N-type graphene® resulting in a stable and efficient material.

### SUMMARY OF THE INVENTION

In that context, the invention proposes a method for producing N-type graphene®, comprising the following stages:
- provision of a graphene® to be doped from an initial graphene® layer,
- N-doping the graphene® to be doped for obtaining the N-type graphene®.

This method is characterized in that the provision of the graphene® to be doped includes an annealing step, where a graphene®-based material issued from the initial graphene® layer is annealed, whereby the graphene® to be doped is an annealed graphene®-based material.

Advantageously, the provision of the graphene® to be doped in the method according to the invention includes a transferring step prior to the annealing step, where the initial graphene® layer or a pretreated graphene® layer derived from the initial graphene® layer is transferred onto a SiO₂/Si substrate to form the graphene®-based material which is next submitted to the annealing step; so the graphene®-based material (to be annealed then doped) is a graphene® wafer.

According to a possible feature of the invention, in the annealing step, the graphene®-based material (for example the graphene® wafer above-defined) is annealed in a forming gas at a temperature between 300°C to 400°C for a period between 2h to 4h. Preferably the graphene®-based material is annealed in a forming gas for 3 hours at 350°C. The forming gas advantageously includes Ar (Argon) and H2 (dihydrogen) in a rate Ar:H2 between 85:15 to 95:05, preferably 90:10.

According to a possible feature of the invention, in the N-doping step, the annealed graphene®-based material (that is the graphene® to be doped) is immersed in an ammonium hydroxide solution which includes NH₃ molecules. The ammonium hydroxide solution advantageously includes an ACS NH₃-based reagent in a rate between 20% to 40%, preferably 28-30%. It is reminded that an ACS reagent is a reagent which meets the grade (that is to say the limits of purity) for inorganic chemicals as established by the American Chemical Society. In a preferred embodiment, the immersion of the annealed graphene®-based material lasts for a time period of more than 4 hours; preferably the time period of immersion is 5h.

According to a possible feature of the invention, after the N-doping step, the N-type graphene® is dried with nitrogen.

According to a possible feature of the invention, the initial graphene® layer is combined with a polymethyl methacrylate (PMMA) dissolved in chlorobenzene with a concentration between 10 to 50mg/mL to form the pretreated graphene® layer (which is so a PMMA/graphene® layer).

The initial graphene® layer can be a CVD-graphene® monolayer grown on a Cu (copper) foil. Other sources or processes for providing graphene® monolayers can be used such as a graphene ink, reduced Graphene® Oxide, etc. But the Chemical Vapor Deposition process is preferred because it easily leads to a single layer moreover having of a higher quality.

The invention extends to the N-type graphene obtained by a method according to the invention.

The inventors have demonstrated that such an N-type graphene® can be characterized by its Raman spectrum, which has a 2D peak at a wavelength between 2665 to 2675 cm⁻¹, that is a lower wavelength than the known N-type graphene® and than N-doped graphene® which are not previously annealed, and a G peak at a wavelength between 1565 to 1575 cm-1 (again such a wavelength value for the G peak is lower than the known N-type graphene® and than a non-annealed N-type graphene®).

The invention also concerns an electrode characterized in that it comprises an N-type graphene® according to the invention.

Such an electrode is advantageously used in various applications of solar cells, OLED (Organic Light Emitting Diodes), lithium batteries and transistors.

### BRIEF DESCRIPTION OF THE DRAWINGS

Additional features and advantages of the present invention are described in, and will be apparent from, the description of the presently preferred embodiments which are set out below with reference to the drawings in which:
Fig. 1 shows the Raman shift spectra of an annealed graphene® wafer before and after doping for 5h.
Fig. 2 and Fig. 3 show the Raman shift spectra of various N-type doped graphene®, two of which being N-type graphene® according to the invention.
Fig. 4 shows the Raman shift spectra of an N-type graphene® according to the invention before and after storage for ten weeks.
Fig. 5 shows current-voltage (I_{D}-V_{G}) transfer curves of gFETs (Field Effect Transistors) formed with various graphene®, one of which being an N-type graphene® according to the invention.
Fig. 6 shows current-voltage (I_{D}-V_{G}) transfer curves of a gFETs formed with an N-type graphene® according to the invention before and after storage for ten weeks.

### DETAILED DESCRIPTION OF THE INVENTION

For comparison purposes, four N-type graphene® samples are prepared.

The first sample is an N-type graphene® according to the invention. It is produced by:
A/ providing a monolayer CVD-graphene® grown on a Cu foil, here after referred to as a graphene®/Cu layer,
B/ combining the graphene®/Cu layer with a PMMA dissolved in chlorobenzene with a concentration of 46 mg/mL.
C/ wet-transferring the PMMA/graphene®/Cu layer onto a SiO₂/Si substrate using a conventional wet-transfer process, thereby obtaining a graphene® wafer,
D/ annealing the graphene® wafer at a 350°C for 3h, in a forming gas composed of Argon and Dihydrogen in a rate Ar:H₂ of 90:10, thereby obtaining an annealed graphene® wafer,

E/ N-doping the annealed graphene® wafer by immersion for 5h in an ammonium hydroxide solution that includes at least one ACS NH₃-based reagent in a rate of 28-30%, thereby obtaining a N-type graphene® according to the invention.

This sample #1 is here after referred to as an N-doped annealed graphene® wafer.

The second N-type graphene® sample is also a N-type graphene® according to the invention produced by directly annealing the graphene®/Cu, and next by N-doping the annealed graphene®/Cu layer using the same step E described above. In other words, the above-described steps B and C are omitted. This sample #2 is here after referred to as an N-doped annealed graphene®/Cu.

The third and fourth N-type graphene® samples are not N-type graphene® according to the invention. Nevertheless, they are N-doped using the same step E/ above-described.

Sample #3 is an N-doped graphene® wafer (or N-doped transferred but non annealed graphene®) obtained by N-doping the graphene® wafer obtained at the end of step C/; in other words, the transferring step (step C/) is carried out but the annealing step (step D/) is omitted.

Sample #4 is a N-doped graphene®/Cu obtained by directly N-doping graphene®/Cu layer; in other words, the above-described steps B, C and D are omitted.

These samples are summed up in the following table:

| | | transferring | annealing | N-doping |
|---|---|---|---|---|
| 1 | N-doped annealed graphene® wafer | X | X | X |
| 2 | N-doped annealed graphene®/Cu | | X | X |
| 3 | N-doped graphene® wafer | X | | X |
| 4 | N-doped graphene®/Cu | | | X |

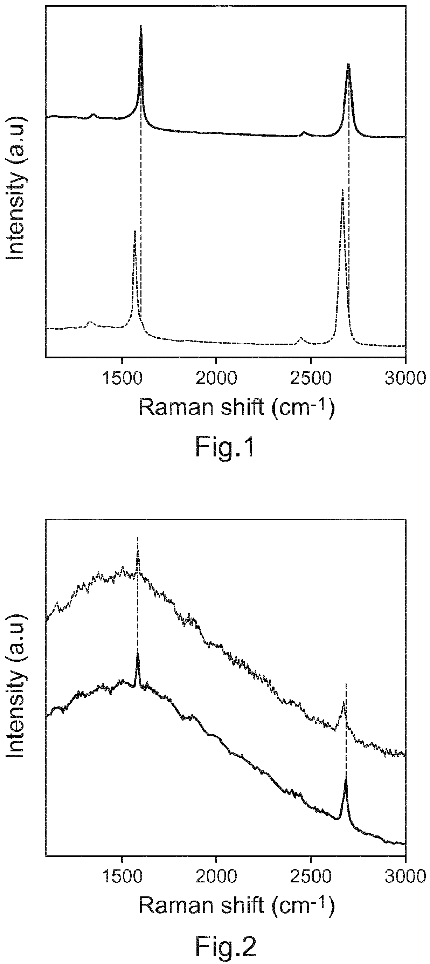

Figure 1 represents the Raman Spectrum of the sample #1 after doping (N-doped annealed graphene® wafer, bottom curve in dotted line) and the Raman Spectrum of this sample before doping (annealed graphene® wafer, top curve in continuous line). Thus, Figure 1 shows the effect of the doping on the Raman Spectra. The effect of the doping is a significant shift of the 2D peak that is to say an offset of the 2D peak toward a lower wavelength. It is known that this shift confirms the doping.

Figure 2 represents the Raman spectrum of an N-doped annealed graphene®/Cu (sample #2, top curve in dotted line) and the Raman spectrum of the N-doped graphene®/Cu (sample #3, bottom curve in continuous line) thereby showing the effect of the annealing alone (without previous transferring) on the Raman spectrum. The effect of the annealing is a further shift (offset toward a lower wavelength) of the 2D peak that shows that the doping is rendered efficient and even enhanced by the annealing.

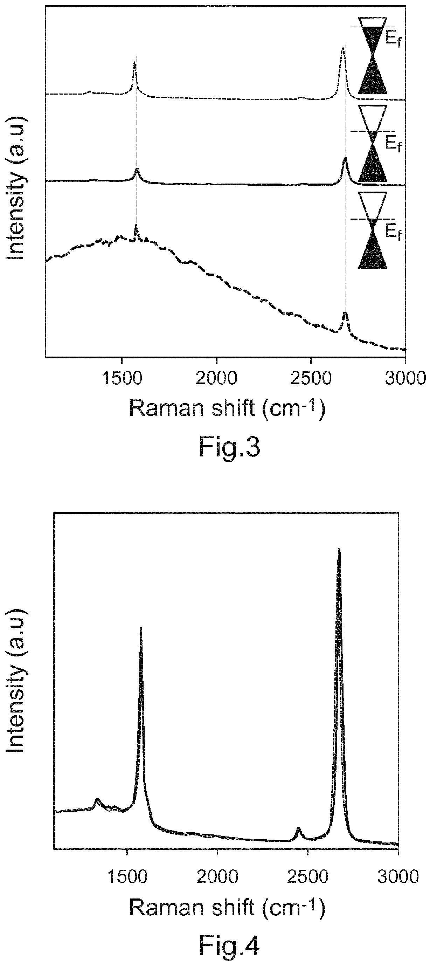

Figure 3 represents the Raman spectra of the following samples: an N-doped graphene®/Cu (sample #4, bottom curve in dashed line), an N-doped graphene® wafer (sample #3, medium curve in continuous line) and a N-doped annealed graphene® wafer (sample #1, top curve in dotted line). The Raman spectrum of the N-doped annealed graphene®/Cu (sample #2) is not reported on figure 3 but can be observed on figure 2.

The following wavelength values for the G peak and the 2D peak are obtained:

| Samples | | G peak (cm⁻¹) | 2D peak (cm⁻¹) |
|---|---|---|---|
| 1 | N-doped annealed graphene® wafer | 1571 | 2669 |
| 2 | N-type annealed graphene®/Cu | 1575 | 2671 |
| 3 | N-doped graphene® wafer | 1585 | 2683 |
| 4 | N doped graphene®/Cu | 1583 | 2685 |

For sake of analysis, sample #4 can be considered as the reference sample since the graphene® layer is neither transferred nor annealed.

It can be noticed that when the transferring step is carried out but not the annealing one (sample #4 compared with sample #3), a very slight shift (offset toward a lower wavelength) in the 2D peaks occurs, this shift being too slight to be significant. Besides, the G peak is very slightly offset toward a higher wavelength. Again, this offset is too slight to be significant and moreover it is not desirable because it shows that the n-doping in graphene is too weak.

When the annealing step is carried out, in combination with the transferring step (sample #1) or without previously transferring the graphene®/Cu onto a SiO₂/Si substrate (sample #2), a significant shift (offset toward a lower wavelength) occurs in the 2D peak. This shift confirms the N-doping in the graphene. Besides, the G peak of the two annealed samples according to the invention (samples #1 and #2) is unchanged or even decreased (that is to say offset toward a lower wavelength) compared with the non-annealed samples (#3 and #4). This also confirms the essential role played by the annealing in the improvement of the adsorption of NH3 on graphene®. The decrease in the G peak is slightly more significant for sample #1 than for sample #2, that is to say when the transferring is carried out in addition to the annealing.

The electronic band structures of the tested samples are also reported on figure 3, showing that the conduction band of the N-doped annealed graphene® wafer (sample #1) is more fulfilled than the ones of the N-doped (non-annealed) graphene® wafer (sample #3) and of the N-doped (non-annealed) graphene®/Cu (sample #4), which are similar. This is another way to illustrate that the doping with the method according to the invention is more efficient.

Another important advantage of the method according to the invention is that the obtained N-type graphene® is unexpectedly stable, as evidenced by Figure 4. Figure 4 represents the Raman spectrum of the N-doped annealed graphene® wafer (sample #1) before storage (in continuous line) and after storage for ten weeks (in dotted line), thereby showing the stability of the N-type graphene® according to the invention. It can be observed that the two curves are almost superimposed on the entire spectrum of wavelengths. In particular, the two peaks (G and 2D) occur at the same wavelengths before and after storage and there is no significant loss of intensity on the entire wavelengths range. Similar curves are obtained with the N-doped annealed graphene®/Cu (sample #2), illustrating no significant differences before and after storage for ten weeks that confirm the amazing stability of the product.

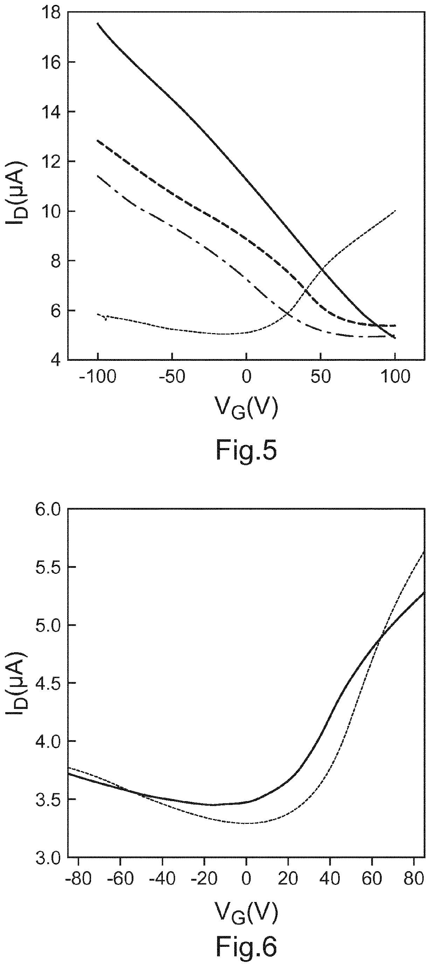

Fig. 5 shows current-voltage (ID-VG) transfer curves of gFETs (Field Effect Transistors), as follows: the curve in continuous line corresponds to a gFET made with a non-doped annealed graphene®, namely the annealed graphene® wafer obtained at the end of step D/ above described; the curve in dashed line corresponds to a gFET made with a non-annealed and non-doped graphene®, namely the graphene® wafer obtained at the end of step C/ above described; the curve in dash-dotted line corresponds to a gFET made with a N-doped (non-annealed) graphene® wafer (that is to say sample #3); the curve in dotted line corresponds to a gFET made with a N-doped annealed graphene® wafer (sample #1). Measurements of gFETs are achieved at room temperature and V_{D} = 10mV. It can be observed that, in response to a positive voltage applied at its gate, only the gFET made with the N-doped annealed graphene® wafer according to the invention can deliver a useful current that moreover increases with the applied gate voltage. Besides, there is more shift in a Dirac point towards zero voltage for annealed graphene® samples than that for transferred graphene® samples without annealing. This additional proves that the annealing process before immersing samples in ammonia solution is the key to achieve the efficient N-doping process.

Besides, Figure 6 also illustrates the stability of gFETs made with a N-doped annealed graphene®, in that case a N-doped annealed graphene® wafer according to sample #1. There is a small shift in Dirac point after storage, which is due to the air. But the two (I_{D}-V_{G}) curves before storage (in continuous line) and after storage for ten weeks (in dotted line) do not diverge, showing that the electric specifications and ability of the gFET have not deteriorated. Similar curves are obtained with a gFET made with an N-doped annealed graphene® /Cu according to sample #2.

The invention extends to all the alternative embodiments that are covered by the appended claims. For example, the step/B above described can be omitted, whereby the graphene®-based material to be annealed then to be doped is a graphene® wafer directly obtain by transferring a CVD-graphene®/Cu layer onto a SiO₂/Si substrate. Likewise, the transferring itself is optional and can then be omitted. As another example, the initial graphene® layer is not limited to a layer obtained by chemical vapor deposition.

## Claims

1. Method for producing N-type graphene® comprising the following stages:
- provision of a graphene® to be doped from an initial graphene® layer,
- N-doping the graphene® to be doped for obtaining the N-type graphene®,
**characterized in that** the provision of the graphene® to be doped includes an annealing step where a graphene®-based material issued from the initial graphene® layer is annealed, whereby the graphene® to be doped is an annealed graphene®-based material.

2. Method according to claim 1, wherein the provision of the graphene® to be doped further includes a transferring step prior to the annealing step, where the initial graphene® layer or a pretreated graphene® layer derived from the initial graphene® layer is transferred onto a SiO₂/Si substrate to form the graphene®-based material which is next submitted to the annealing step.

3. Method according to claim 1 or 2, wherein, in the annealing step, the graphene®-based material is annealed in a forming gas at a temperature between 300°C to 400°C.

4. Method according to claim 3, wherein the forming gas includes Ar (Argon) and H₂ (dihydrogen) in a rate Ar:H₂ between 85:15 to 95:05.

5. Method according to any one of claims 1 to 4, wherein in the N-doping step, the annealed graphene®-based material is immersed in an ammonium hydroxide solution which includes NH₃ molecules.

6. Method according to claim 5, wherein the ammonium hydroxide solution includes an ACS NH3-based reagent in a rate between 20% to 40%.

7. Method according to any one of claims 4 to 6, **characterized in that** the immersion of the annealed graphene®-based material lasts for a period of more than 4 hours.

8. Method according to any one of the preceding claims, wherein the N-type graphene® obtained at the end of the N-doping step is next dried with nitrogen.

9. Method according to any one of claims 1 to 8, wherein the initial graphene® layer is pretreated by combining the initial graphene® layer with a polymethyl methacrylate (PMMA) dissolved in chlorobenzene with a concentration between 10 to 50mg/mL.

10. Method according to any one of claim 1 to 9, wherein the initial graphene® layer is a CVD-graphene® monolayer grown on a Cu foil.

11. N-type graphene® **characterized by** a Raman spectrum having a 2D peak at a wavelength between 2665 to 2675 cm⁻¹ and a G peak at a wavelength between 1565 to 1575 cm⁻¹.

12. Electrode **characterized in that** it comprises an N-type graphene® produced by a method according to any one of claims 1 to 10 or an N-type graphene® according to claim 11.

13. Organic Light Emitting diodes (OLED) **characterized in that** it comprises an N-type graphene® produced by a method according to one of claims 1 to 10 or an N-type graphene® according to claim 11.

14. Lithium battery **characterized in that** it comprises a N-type graphene® produced by a method according to one of claims 1 to 10 or an N-type graphene® according to claim 11.

15. Transistor **characterized in that** it comprises an N-type graphene® produced by a method according to one of claims 1 to 10 or an N-type graphene® according to claim 11.

16. Solar cell **characterized in that** it comprises a N-type graphene® produced by a method according to one of claims 1 to 10 or an N-type graphene® according to claim 11.
